(19) Europäisches Patentamt
European Patent Office
Office européen des brevets

(11) EP 4 682 490 A1

(12) EUROPÄISCHE PATENTANMELDUNG

(43) Veröffentlichungstag:
21.01.2026 Patentblatt 2026/04

(21) Anmeldenummer: 25184871.9

(22) Anmeldetag: 24.06.2025

(51) Internationale Patentklassifikation (IPC):
G01J 3/02 (2006.01)    G02B 27/00 (2006.01)
G02B 5/00 (2006.01)

(52) Gemeinsame Patentklassifikation (CPC):
G01J 3/0229; G02B 5/005; G02B 27/0012

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH LA MA MD TN

(30) Priorität: 15.07.2024 DE 102024120015

(71) Anmelder: Analytik Jena GmbH+Co. KG
07745 Jena (DE)

(72) Erfinder:
• Okruss, Michael
14482 Potsdam (DE)
• Münch, Stefan
10711 Berlin (DE)
• Braun, Marco
07743 Jena (DE)

(74) Vertreter: Endress + Hauser Group Services
(Deutschland) AG+Co. KG
Colmarer Straße 6
79576 Weil am Rhein (DE)

(54) **VERFAHREN ZUR ANPASSUNG EINER APERATURGEOMETRIE EINER APERATUR EINER APERATURBLENDE AN EINEN STRAHLENGANG VON LICHTBÜNDELN IN EINEM SPEKTROMETER**

(57) Die Erfindung bezieht sich auf ein Verfahren zur Anpassung einer Aperturgeometrie einer Apertur (1) einer Aperturblende (2) an einen Strahlengang (3) von Lichtbündeln in einem Spektrometer (4), wobei das Spektrometer (4) die Aperturblende (2), mehrere optische Komponenten (5) und einen Detektor (6) aufweist, wobei das Verfahren zumindest die folgenden Schritte aufweist:
- Vorgeben eines optischen Modells, welches den Strahlengang (3) beschreibt und die optischen Komponenten (5) sowie deren Position und Ausrichtung umfasst, wobei das optische Modell einen ersten freien Parametersatz aufweist, welcher die Aperturgeometrie beschreibt und zwei oder mehr erste freie Parameter umfasst,
- Aufstellen einer Gütefunktion, welche mindestens ein Gütekriterium des Strahlengangs (3) umfasst, wobei die Gütefunktion dazu ausgestaltet ist, anhand des optischen Modells ein Gütemaß zu berechnen,
- Einsetzen einer Vielzahl an Sätzen an Werten für den ersten freien Parametersatz und Berechnen des Gütemaßes für jeden Satz an Werten,
- Bestimmen der Aperturgeometrie durch Auswählen desjenigen Satzes an Werten des ersten freien Parametersatzes, für welchen der niedrigste Wert des Gütemaßes berechnet wurde.

Fig. 2

EP 4 682 490 A1

**EP 4 682 490 A1**

**Beschreibung**

Die Erfindung betrifft ein Verfahren zur Anpassung einer Aperturgeometrie einer Apertur einer Aperturblende an einen Strahlengang von Lichtbündeln in einem Spektrometer, wobei das Spektrometer die Aperturblende, mehrere optische Komponenten und einen Detektor aufweist, wobei die optischen Komponenten derart angeordnet und ausgestaltet sind, dass sie den Strahlengang der Lichtbündel von einer Lichtquelle zum Detektor führen, wobei der Detektor dazu ausgestaltet ist, die Lichtbündel in Form eines Spektrums zu detektieren. Die Erfindung betrifft ferner ein Verfahren zur Herstellung einer Aperturblende mit einer Apertur, deren Aperturgeometrie an einen Strahlengang von Lichtbündeln in einem Spektrometer angepasst ist, und ein Spektrometer mit mehreren optischen Komponenten, einem Detektor und einer Aperturblende.

Aperturblenden werden regelmäßig in Spektrometern eingesetzt, um die Bündelgeometrie der Lichtbündel festzulegen, indem sie einen Teil der Lichtbündel passieren lassen und einen anderen Teil für den weiteren Strahlengang blockieren. Dazu weisen sie eine, oftmals schwarze, Grundfläche mit einer Apertur auf, durch welche die Lichtbündel passieren können. Die Apertur kann verschiedene Aperturgeometrien aufweisen. Gängige Aperturgeometrien weisen beispielsweise kreisförmige, elliptische oder rechteckige Formen auf. Aperturblenden werden häufig vor einem Eintrittsspalt des Spektrometers angeordnet, d.h. an einem Punkt, an dem die Lichtbündel noch nicht spektral aufgespalten sind. Sie können jedoch auch an anderen Positionen des Strahlengangs angeordnet sein. Indem die Aperturblende die Bündelgeometrie der Lichtbündel festlegt, trägt sie in hohem Maße zur Bestimmung des geometrischen Lichtdurchsatzes (Etendue) des Spektrometers bei. Zudem bestimmt die Aperturblende zusammen mit der Brennweite des abbildenden Systems das Öffnungsverhältnis des Systems und hat großen Einfluss auf Abbildungsfehler. Durch die Wahl der Aperturblende und insbesondere der Aperturgeometrie können somit verschiedene Spektrometer-Charakteristika stark beeinflusst werden. Die gängigen Aperturgeometrien sind allerdings regelmäßig nicht passend für den im Spektrometer vorhandenen Strahlengang, so dass die Vorteile der Aperturblende hinsichtlich Abbildungsfehler u.ä. nicht optimal genutzt werden können.

Die Aufgabe der vorliegenden Erfindung ist es daher, ein Verfahren und ein Spektrometer anzugeben, welches eine Anpassung einer Aperturgeometrie an einen Strahlengang ermöglicht.

Die Aufgabe wird erfindungsgemäß gelöst durch ein Verfahren zur Anpassung einer Aperturgeometrie einer Apertur einer Aperturblende an einen Strahlengang von Lichtbündeln in einem Spektrometer nach Anspruch 1, ein Verfahren zur Herstellung einer Aperturblende nach Anspruch 13 und ein Spektrometer nach Anspruch 14.

Erfindungsgemäß wird die Aufgabe gelöst durch ein Verfahren zur Anpassung einer Aperturgeometrie einer Apertur einer Aperturblende an einen Strahlengang von Lichtbündeln in einem Spektrometer, wobei das Spektrometer die Aperturblende, mehrere optische Komponenten und einen Detektor aufweist, wobei die optischen Komponenten derart angeordnet und ausgestaltet sind, dass sie den Strahlengang der Lichtbündel von einer Lichtquelle zum Detektor führen, wobei der Detektor dazu ausgestaltet ist, die Lichtbündel in Form eines Spektrums zu detektieren, wobei das Verfahren zumindest die folgenden Schritte aufweist:

- Vorgeben eines optischen Modells, welches den Strahlengang beschreibt und die optischen Komponenten sowie deren Position und Ausrichtung umfasst, wobei das optische Modell einen ersten freien Parametersatz aufweist, welcher die Aperturgeometrie beschreibt und mehrere erste freie Parameter umfasst,
- Aufstellen einer Gütefunktion, welche mindestens ein Gütekriterium des Strahlengangs umfasst, wobei die Gütefunktion dazu ausgestaltet ist, anhand des optischen Modells ein Gütemaß zu berechnen,
- Einsetzen einer Vielzahl an Sätzen an Werten für den ersten freien Parametersatz in das optische Modell und Berechnen des Gütemaßes für jeden Satz an Werten,
- Bestimmen der Aperturgeometrie durch Auswählen desjenigen Satzes an Werten, für den der niedrigste Wert des Gütemaßes berechnet wurde.

Das erfindungsgemäße Verfahren ermöglicht somit eine Anpassung der Aperturgeometrie an den Strahlengang im Spektrometer. Dafür wird zunächst ein optisches Modell vorgegeben, in welchem die Position und Ausrichtung der optischen Komponenten vorgegeben und der Strahlengang der Lichtbündel definiert ist. Im optischen Modell kann auch eine Flächenform der optischen Komponenten vorgegeben sein. Das optische Modell kann eine mathematische Beschreibung der Positionen und Ausrichtungen der optischen Komponenten umfassen und anhand dessen den Strahlengang berechnen. Das optische Modell weist zusätzlich einen ersten freien Parametersatz für die Aperturgeometrie auf. Der erste freie Parametersatz umfasst mehrere freie erste Parameter, d.h. zwei oder mehr erste freie Parameter. Den mehreren ersten freien Parametern sind keine festen Werte zugeordnet oder vorgegeben, sondern die Werte der ersten freien Parameter werden mittels des erfindungsgemäßen Verfahrens ermittelt bzw. optimiert. Optional kann den ersten freien Parametern eine oder mehrere Randbedingungen vorgegeben sein, wie beispielsweise Minimum- oder Maximalwerte.

Zusätzlich wird eine Gütefunktion aufgestellt, welche zur Berechnung eines Gütemaßes dient. Das Gütemaß wird anhand des optischen Modells berechnet. Die Gütefunktion kann dazu ausgestaltet sein, das optische Modell zur Berechnung des Gütemaßes einzusetzen. Die Gütefunktion kann das mindestens eine Gütemaß anhand des optischen Modells unter Berücksichtigung des mindestens einen Gütekriteriums berechnen. Dabei kann die Gütefunktion dazu ausgestaltet sein, zu prüfen, inwieweit das optische Modell bzw. der Strahlengang das mindestens eine Gütekriterium erfüllt und anhand dieser Bedingung das Gütemaß berechnen. Die Gütefunktion ist insbesondere derart ausgestaltet, dass kleinere Wert der berechneten Gütemaße mit einer größeren Erfüllung des mindestens einen Gütekriteriums zusammenhängen, während höhere Werte der berechneten Gütemaße mit einer geringeren Erfüllung des mindestens einen Gütekriteriums einhergehen. Die Gütefunktion kann auch derart ausgestaltet sein, dass größere Wert der berechneten Gütemaße mit einer größeren Erfüllung des mindestens einen Gütekriteriums zusammenhängen, während kleinere Werte der berechneten Gütemaße mit einer geringeren Erfüllung des mindestens einen Gütekriteriums einhergehen. Das mindestens eine Gütekriterium kann eine Spektrometer-Charakteristik bzw. eine Spektrometer-Eigenschaft beschreiben. Insbesondere wird als das mindestens eine Gütekriterium eine solche Spektrometer-Charakteristik gewählt, welche einen großen Einfluss auf die Maße des Spektrometers oder das Spektrum hat.

Anschließend werden die Werte des ersten freien Parametersatzes variiert, indem eine Vielzahl an Sätzen an Werten für die mehreren ersten freien Parameter ins optische Modell eingesetzt werden. Dabei kann ein erster Satz an Werten für jeden der mehreren ersten freien Parameter jeweils einen ersten Wert aufweisen. Die ersten Werte der ersten freien Parameter können identisch oder unterschiedlich für die jeweiligen ersten freien Parameter sein. Nach Einsetzen des ersten Satzes an Werten wird das Gütemaß mittels der Gütefunktion berechnet. In einem nächsten Schritt kann ein zweiter Satz an Werten für die ersten freien Parameter eingesetzt werden und wieder die entsprechenden Gütemaße berechnet werden usw. Für die eingesetzten Sätze an Werten der mehreren ersten freien Parameter wird mittels der Gütefunktion jeweils ein Gütemaß berechnet. Schließlich wird derjenige Satz an Werten ausgewählt, für welchen das niedrigste Gütemaß berechnet wurde. Anhand der ausgewählten Satz an Werten des ersten freien Parametersatzes wird die Aperturgeometrie bestimmt. Im Falle, dass die Gütefunktion derart ausgestaltet ist, dass größere Werte der berechneten Gütemaße mit einer größeren Erfüllung des mindestens einen Gütekriteriums einhergehen, sollten in dieser Ausgestaltung folglich diejenigen Werte des ersten freien Parametersatzes ausgewählt werden, für welche das höchste Gütemaß berechnet wurde.

Die Vielzahl an Sätzen an Werten für den ersten freien Parametersatz können zufällig gewählt sein oder mittels verschiedener Verfahren bestimmt werden. Mögliche Verfahren für die Bestimmung von Werten des ersten freien Parametersatzes sind lokale Optimierungsverfahren, wie beispielsweise Nelder-Mead, Damped Least Squares, Gradient Descent oder Orthogonal Descent, wobei insbesondere Hillclimbing, bzw. Downhill-Suchverfahren eingesetzt werden, oder auch globale Optimierungsalgorithmen (z.B. mit randomisierter Wahl der Startparameter). Auch eine Kombination von globalen und lokalen Verfahren ist möglich.

Der erste freie Parametersatz kann die Aperturgeometrie in Form einer einzelnen Kurve oder in Form von mehreren zusammengesetzten Kurven, beispielsweise einem Spline, mathematisch beschreiben. Die zusammengesetzte/n Kurve/n bildet bzw. bilden dabei eine geschlossene Form oder mehrere geschlossene Formen. Unter geschlossener Form ist eine Form zu verstehen, deren Umfang eine durchgängige, nicht-unterbrochene Linie ist. Ein Spline n-ten Grades ist eine Funktion, die abschnittsweise aus Polynomen höchstens n-ten Grades zusammengesetzt ist. Insbesondere durch die Verwendung eines Splines ergeben sich eine Vielzahl an ersten freien Parametern im ersten freien Parametersatz.

Eine mathematische Beschreibung der Aperturgeometrie kann auch mittels einer Funktion in Polarkoordinaten für einen Radius r und Winkel $\theta$ im Wertebereich $[0,2\pi]$ erfolgen, wobei r = $f(\theta)$ gilt. Die Funktion kann z.B. in der Form aufgestellt werden: $f(r, \theta) = m \cdot (1 + \rho(\theta))$,
und eine Abweichung vom skalieren Einheitskreis beschreiben, wobei m ein Skalierungsfaktor ist. Die Funktion muss folgende Nebenbedingungen erfüllen:

1.

$$\rho(\theta) > -1; \forall \theta$$

2.

$$\rho(0) = \rho(2\pi)$$

Eine mögliche Beschreibung für $\rho(\theta)$ besteht in einer Fourier-Reihenentwicklung der Form:

$$\rho(\theta) = \sum_{i=1}^{n} a_i \cdot \sin(i \cdot \theta) + \sum_{i=1}^{n} b_i \cdot \cos(i \cdot \theta) \ mit \ i, n \ \epsilon \mathbb{N}$$

Die Koeffizienten ($a_i$, $b_i$) und der Skalierungsfaktor m sind zu bestimmen und bilden den ersten freien Parametersatz.

In einer Ausgestaltung wird als Aperturgeometrie eine einzelne Apertur oder eine aus mehreren voneinander beabstandeten Teilbereichen zusammengesetzte Apertur bestimmt. Die bestimmte Aperturgeometrie kann somit eine zusammenhängende Fläche aufweisen oder mehrere, d.h. zwei oder mehr, voneinander getrennte Flächen.

In einer Weiterbildung wird die Aperturblende an einer Position des Strahlengangs angeordnet, an welcher die Lichtbündel spektral aufgespalten oder nicht spektral aufgespalten vorliegt. Ist die Aperturblende bspw. benachbart zum Spalt, so sind die Lichtbündel an der Position der Aperturblende in der Regel noch nicht spektral aufgespalten. Ist die Aperturblende bspw. hinter einem Gitter oder näher zum Detektor angeordnet, so können die Lichtbündel an der Position der Aperturblende spektral aufgespalten vorliegen. In diesem Fall kann aufgrund der Aufspaltung der Lichtbündel hinsichtlich ihrer Wellenlängen ggf. eine besonders gute Anpassung der Aperturgeometrie hinsichtlich Abbildungsfehler erreicht werden.

Bevorzugt wird die Aperturblende im Strahlengang vor oder hinter einem Spalt des Spektrometers angeordnet. Der Spalt kann ein Eintrittsspalt des Spektrometers sein. Vorzugsweise ist die Aperturblende benachbart zum Spalt angeordnet. Zwischen dem Spalt und der Aperturblende kann eine optische Komponente, beispielsweise ein Spiegel, angeordnet sein. Bevorzugt ist die Aperturblende im Strahlengang zum Detektor vor dem Spalt angeordnet.

In einer Weiterbildung weist das optische Modell einen zweiten freien Parameter auf, welcher eine Position der Aperturblende im Strahlengang beschreibt, wobei eine Vielzahl an Sätzen an Werten für die ersten freien Parameter und den zweiten freien Parameter eingesetzt wird und das Gütemaße für jeden Satz an Werten berechnet wird, wobei die Aperturgeometrie und die Position der Aperturblende durch Auswählen desjenigen Satzes an Werten der ersten freien Parameter und des zweiten freien Parameters bestimmt werden, für welchen der niedrigste Wert des Gütemaßes berechnet wurde. Im Falle, dass die Gütefunktion derart ausgestaltet ist, dass größere Werte der berechneten Gütemaße mit einer größeren Erfüllung des mindestens einen Gütekriteriums einhergehen, sollte in dieser Ausgestaltung folglich derjenigen Satz an Werten für die ersten freien Parameter und den zweiten freien Parameter ausgewählt werden, für den das höchste Gütemaß berechnet wurde.

In einer alternativen Ausgestaltung wird eine Position der Aperturblende im optischen Modell vorgegeben. Die Position der Aperturblende ist damit definiert und nicht als freier Parameter im optischen Modell enthalten.

Bevorzugt wird als das mindestens eine Gütekriterium ein Gütekriterium für eine Spektrometer-Geometrie, ein Gütekriterium für Abbildungsfehler und/oder ein Gütekriterium für parasitäre Bündelverläufe verwendet. Das Gütekriterium für die Spektrometer-Geometrie bezieht sich insbesondere auf die Maße des Spektrometers. Dabei ist es von Vorteil, ein Spektrometer mit kleinen Maßen zu erhalten. Das Gütekriterium für Abbildungsfehler bezieht sich insbesondere auf Abbildungsfehler im Spektrum. Wünschenswert ist dabei eine möglichst wenige Abbildungsfehler zu erhalten. Das Gütekriterium für parasitäre Bündelverläufe bezieht sich insbesondere auf unerwünschte Lichtbündel, die sich negativ auf das Spektrum auswirken und bspw. von Reflexionen an optischen Komponenten stammen.

Vorzugsweise umfasst die Gütefunktion mehrere Gütekriterien des Strahlengangs, wobei die Gütefunktion anhand des optischen Modells und einer vorgegebenen Gewichtung der Gütekriterien ein Gütemaß berechnet. Der Ausdruck "mehrere Gütekriterien" bedeutet, dass zwei oder mehr Gütekriterien verwendet werden. So kann die Gütefunktion ein erstes Gütekriterium für die Spektrometer-Geometrie, ein zweites Gütekriterium für Abbildungsfehler und ein drittes Gütekriterium für parasitäre Bündelverläufe beschreiben. Die mehreren Gütekriterien können mittels einer "UND"-Verknüpfung in der Gütefunktion verknüpft sein.

In einer weiteren Ausgestaltung werden neben der Reihenfolge auch eine Position und Ausrichtung der optischen Komponenten im optischen Modell vorgegeben. Die Position und Ausrichtung der optischen Komponente ist damit im optischen Modell festgelegt.

In einer alternativen Ausgestaltung weist das optische Modell mindestens einen dritten freien Parameter für eine Position, Ausrichtung und/oder Flächenform für zumindest eine der optischen Komponenten auf. Die Position, Ausrichtung und/oder Flächenform der zumindest einen optischen Komponente kann bei dem vorgeschlagenen Verfahren als mindestens dritter freier Parameter zusätzlich zu den ersten freien Parametern bestimmt werden. Beispielsweise kann ein dritter freier Parameter für die Position eines Spiegels vorgehen sein, ein vierter freier Parameter für die Ausrichtung des Spiegels, ein fünfter freier Parameter für die Flächenform einer Linse usw. Dabei werden eine Vielzahl an Sätzen an Werten für die ersten freien Parameter und für den mindestens einen dritten freien Parameter ins optische Modell eingesetzt und das Gütemaß für jeden Satz an Werten berechnet, wobei derjenige Satz an Werten der ersten freien Parameter und des mindestens einen dritten freien Parameters ausgewählt wird, für welchen das niedrigste Gütemaß berechnet wurde.

In einer Ausgestaltung werden als optische Komponenten Spiegel, Filter, Gitter, Prismen und/oder Linsen verwendet.

Bevorzugt wird als eine optische Komponente ein Echelle-Gitter verwendet.

In einer Ausgestaltung wird als Spektrometer ein ICP-OES-Gerät oder AAS-Gerät verwendet. ICP-OES steht für "inductively coupled plasma optical emission spectroscopy". Beim ICP-OES-Gerät handelt es sich um eine Art der Emissionsspektroskopie, bei der ein induktiv gekoppeltes Plasma zur Erzeugung angeregter Atome und Ionen verwendet wird, die elektromagnetische Strahlung mit den für ein bestimmtes Element charakteristischen Wellenlängen emittieren. AAS steht für Atomabsorptionsspektroskopie. Die AAS ist ein spektroanalytisches Verfahren zur quantitativen Bestimmung chemischer Elemente durch freie Atome im gasförmigen Zustand. Die Atomabsorptionsspektroskopie beruht auf der Absorption von Licht durch freie Ionen und Moleküle. Sowohl das ICP-OES- als auch das AAS-Gerät weisen häufig eine hohe Zahl an optischen Komponenten und insbesondere ein Echelle-Gitter auf. Beide Geräte dienen zur Analyse von Proben hinsichtlich ihrer atomaren Zusammensetzung. Für beide Geräte ist das vorgeschlagene Verfahren besonders vorteilhaft, da aufgrund des komplexen Strahlengangs gängige Aperturgeometrien kein optimales Ergebnis hinsichtlich des mindestens einen Gütekriteriums liefern.

Die der vorliegenden Erfindung zugrunde liegende Aufgabe wird weiterhin gelöst durch ein Verfahren zur Herstellung einer Aperturblende mit einer Apertur, deren Aperturgeometrie an einen Strahlengang von Lichtbündeln in einem Spektrometer angepasst ist, wobei das Spektrometer mehrere optische Komponenten und einen Detektor aufweist, wobei die optischen Komponenten derart angeordnet und ausgestaltet sind, dass sie den Strahlengang der Lichtbündel von einer Lichtquelle zum Detektor führen, wobei der Detektor dazu ausgestaltet ist, die Lichtbündel in Form eines Spektrums zu detektieren, wobei das Verfahren zumindest die folgenden Schritte aufweist:

- Bestimmen der Aperturgeometrie nach einer der vorherigen Ausgestaltungen,
- Bereitstellen eines Rohlings für die Aperturblende,
- Ausnehmen zumindest eines Bereichs des Rohlings, welcher der bestimmten Aperturgeometrie entspricht.

Mittels des erfindungsgemäßen Verfahrens wird somit eine Aperturblende erhalten, welche die bestimmte Aperturgeometrie aufweist. Der Rohling kann beispielsweise ein Metall- oder Plastikteil sein. Das Ausnehmen des mindestens einen Bereichs des Rohlings, welche der bestimmten Aperturgeometrie entspricht, kann mittels Fräsen oder Schneidens erfolgen. Optional kann der Rohling vor oder nach dem Schritt des Ausnehmens derart bearbeitet werden, dass er eine schwarze Oberfläche aufweist. Alternativ kann die Aperturblende mittels eines additiven Fertigungsverfahrens, wie beispielsweise 3D-Druck, hergestellt werden.

Die der vorliegenden Erfindung zugrunde liegende Aufgabe wird ferner gelöst durch ein Spektrometer mit mehreren optischen Komponenten, einem Detektor und einer Aperturblende, welche nach dem Verfahren nach der vorherigen Ausgestaltung hergestellt ist, wobei die optischen Komponenten derart angeordnet und ausgestaltet sind, dass sie den Strahlengang der Lichtbündel von einer Lichtquelle zum Detektor führen, wobei der Detektor dazu ausgestaltet ist, die Lichtbündel in Form eines Spektrums zu detektieren.

In dem erfindungsgemäßen Spektrometer ist somit eine Aperturblende eingesetzt, deren Aperturgeometrie an den Strahlengang im Spektrometer angepasst ist.

Im Weiteren wird die vorliegende Erfindung anhand der nachfolgenden Figuren Fig. 1-3 näher erläutert werden. Sie zeigen:

Fig. 1:     eine schematische Darstellung eines erfindungsgemäßen Spektrometers.

Fig. 2:     eine schematische Darstellung des Rohlings bzw. der Aperturblende.

Fig. 3:     eine weitere Darstellung einer erfindungsgemäß hergestellten Aperturblende.

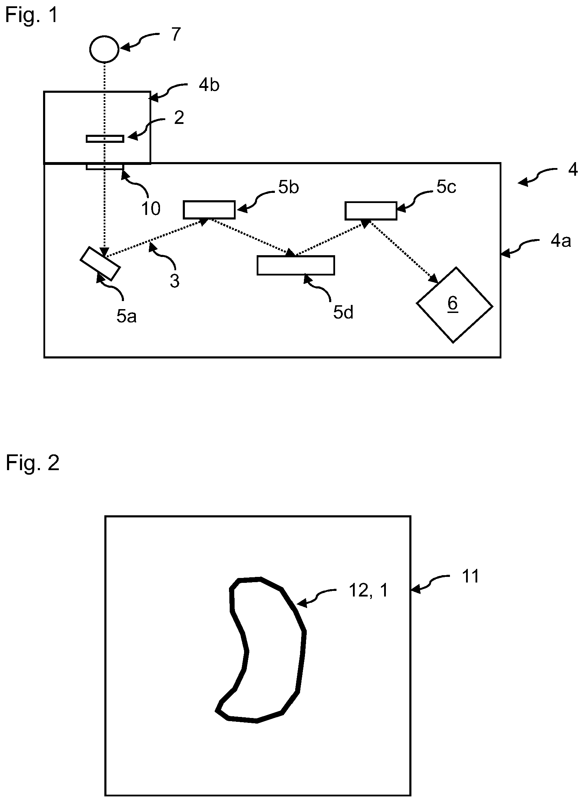

In Fig. 1 ist eine schematische Darstellung des erfindungsgemäßen Spektrometers 4 gezeigt. Das Spektrometer 4 umfasst mehrere optische Komponenten, eine Aperturblende 2 und einen Detektor 6. Die optischen Komponenten 5 sind derart angeordnet und ausgestaltet, dass sie den Strahlengang 3 der Lichtbündel von einer Lichtquelle 7 zum Detektor 6 führen. Der Detektor 6 ist dazu ausgestaltet, die Lichtbündel in Form eines Spektrums zu detektieren. Das Spektrometer 4 kann in mehrere Abschnitte unterteilt sein, bspw. in einen Hauptbereich 4a und einen Vorbereich 4b. Der Vorbereich 4b kann zwischen der Lichtquelle 7 und dem Hauptbereich 4a angeordnet sein. Der Vorbereich 4b kann dazu ausgestaltet sein, die von der Lichtquelle 7 kommenden Lichtbündel zu sammeln und in den Hauptbereich 4a zu führen. Der Vorbereich 4b kann weitere optische Komponenten aufweisen, wie bspw. eine Eingangsöffnung oder Spiegel oder Linsen, welche der Übersichtlichkeit halber nicht gezeigt sind. Das Spektrometer 4 kann einen Spalt 10 aufweisen. Der Spalt 10 kann zwischen dem Hauptbereich 4a und dem Vorbereich 4b angeordnet sein. Die Aperturblende 2 kann benachbart zum Spalt 10 angeordnet sein. Die optischen Komponenten 5a,5b,5c können Spiegel sein. Die optische Komponente 5d ist beispielhaft als Echelle-Gitter ausgestaltet. Weitere optische Komponenten können Filter, Prismen und/oder Linsen sein. Das Spektrometer 4 kann ein ICP-OES-Gerät oder ein AAS-Gerät sein.

Wie bereits beschrieben, wird im erfindungsgemäßen System zunächst ein optisches Modell vorgegeben, welches den Strahlgang 3 beschreibt und welches einen ersten freien Parametersatz für die Aperturgeometrie aufweist. Zudem wird eine Gütefunktion mit mindestens einem Gütekriterium aufgestellt. Anschließend werden eine Vielzahl an Sätzen an Werten für den ersten freien Parametersatz in das optische Modell eingesetzt und für jeden eingesetzten Satz an Werten das Gütemaß berechnet. Anschließend wird derjenige Satz an Werten des ersten freien Parametersatzes ausgewählt, für welchen der niedrigste Wert des Gütemaßes berechnet wurde, und anhand des ausgewählten Satzes an Werten die Aperturgeometrie bestimmt.

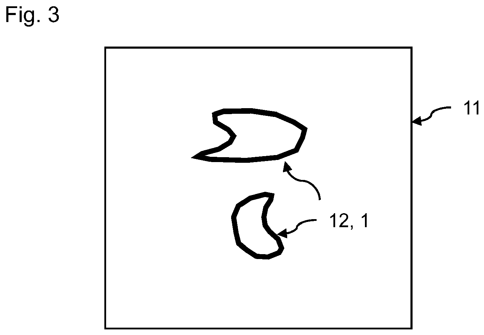

Die solchermaßen bestimmte Aperturgeometrie kann zum Herstellen einer Aperturblende 2 verwendet werden. Dafür wird ein Rohling 11 bereitgestellt (vgl. Fig. 2), bei dem mindestens ein Bereich 12 ausgenommen wird, dessen Form der bestimmten Aperturgeometrie entspricht. Der mindestens eine Bereich 12 bildet dann die Apertur 1 der Aperturblende 2. Das in Fig. 2 gezeigte Beispiel der Aperturgeometrie zeigt eine einzelne Apertur 1. Es ist jedoch auch möglich, dass eine aus mehreren voneinander beabstandeten Teilbereichen zusammengesetzte Apertur 1 erhalten wird, wie beispielhaft in Fig. 3 gezeigt.

Im optischen Modell können bereits die Positionen, Ausrichtungen und Flächenformen der optischen Komponenten vorgegeben sein. Ggf. kann auch die Position der Aperturblende 2 vorgegeben sein. Damit ist der Strahlengang nahezu vollständig definiert und nur der erste freie Parametersatz für die Aperturgeometrie weist freie Parameter im optischen Modell auf. Alternativ ist es jedoch möglich, weitere freie Parameter im optischen Modell einzusetzen. Zunächst kann ein zweiter freier Parameter verwendet werden, um die Position der Aperturblende 2 im Strahlengang 3 zu beschreiben. Ferner kann mindestens ein dritter freier Parameter für eine Position, Ausrichtung und/oder Flächenform zumindest einer der optischen Komponenten verwendet werden. Der erste freie Parametersatz, der zweite freie Parameter und der mindestens eine dritte Parameter können beliebig miteinander kombiniert werden. Werden mehr freie Parameter als der erste freie Parametersatz im optischen Modell verwendet, so werden jeweils eine Vielzahl an Sätzen an Werten für den ersten freien Parametersatz und den/die weiteren freien Parameter eingesetzt und das Gütemaß für Satz an Werten der für den ersten freien Parametersatz und den/die weiteren Parameter eingesetzten Werten berechnet. Der Satz an Werten mit den niedrigsten berechneten Gütemaß wird dann ausgewählt und anhand dieser ausgewählten Kombination die Aperturgeometrie bestimmt.

**Bezugszeichenliste**

| | |
|---|---|
| 1 | Apertur |
| 2 | Aperturblende |
| 3 | Strahlengang |
| 4 | Spektrometer |
| 4a | Hauptbereich |
| 4b | Vorbereich |
| 5 | optische Komponente |
| 5a | Spiegel |
| 5b | Spiegel |
| 5c | Spiegel |
| 5d | Echelle-Gitter |
| 6 | Detektor |
| 7 | Lichtquelle |
| 10 | Spalt |
| 11 | Rohling |
| 12 | Bereich |

**Patentansprüche**

1. Verfahren zur Anpassung einer Aperturgeometrie einer Apertur (1) einer Aperturblende (2) an einen Strahlengang (3) von Lichtbündeln in einem Spektrometer (4), wobei das Spektrometer (4) die Aperturblende (2), mehrere optische Komponenten (5) und einen Detektor (6) aufweist, wobei die optischen Komponenten (5) derart angeordnet und ausgestaltet sind, dass sie den Strahlengang (3) der Lichtbündel von einer Lichtquelle (7) zum Detektor (6) führen, wobei der Detektor (6) dazu ausgestaltet ist, die Lichtbündel in Form eines Spektrums zu detektieren, wobei das Verfahren zumindest die folgenden Schritte aufweist:

- Vorgeben eines optischen Modells, welches den Strahlengang (3) beschreibt und die optischen Komponenten (5) sowie deren Position und Ausrichtung umfasst, wobei das optische Modell einen ersten freien Parametersatz aufweist, welcher die Aperturgeometrie beschreibt und zwei oder mehr erste freie Parameter umfasst,
- Aufstellen einer Gütefunktion, welche mindestens ein Gütekriterium des Strahlengangs (3) umfasst, wobei die Gütefunktion dazu ausgestaltet ist, anhand des optischen Modells ein Gütemaß zu berechnen,
- Einsetzen einer Vielzahl an Sätzen an Werten für den ersten freien Parametersatz in das optische Modell und Berechnen des Gütemaßes für jeden Satz an Werten,
- Bestimmen der Aperturgeometrie durch Auswählen desjenigen Satzes an Werten, für den der niedrigste Wert des Gütemaßes berechnet wurde.

2. Verfahren nach Anspruch 1,
wobei als Aperturgeometrie eine einzelne Apertur oder eine aus mehreren voneinander beabstandeten Teilbereichen zusammengesetzte Apertur bestimmt wird.

3. Verfahren nach einem der vorherigen Ansprüche,
wobei die Aperturblende (2) an einer Position des Strahlengangs (3) angeordnet wird, an welcher die Lichtbündel spektral aufgespalten oder nicht spektral aufgespalten vorliegt.

4. Verfahren nach einem der vorherigen Ansprüche,
wobei das optische Modell einen zweiten freien Parameter aufweist, welcher eine Position der Aperturblende (2) im Strahlengang beschreibt, wobei eine Vielzahl an Sätzen an Werten für den ersten freien Parametersatz und für den zweiten freien Parameter ins optische Modell eingesetzt werden und das Gütemaß für Satz an Werten berechnet wird, wobei die Aperturgeometrie und die Position der Aperturblende (2) durch Auswählen desjenigen Satzes an Werten der ersten freien Parameter und des zweiten freien Parameters bestimmt werden, für welchen der niedrigste Wert des Gütemaßes berechnet wurde.

5. Verfahren nach einem der Ansprüche 1-3,
wobei eine Position der Aperturblende (2) im optischen Modell vorgegeben wird.

6. Verfahren nach einem der vorherigen Ansprüche,
wobei als das mindestens eine Gütekriterium ein Gütekriterium für eine Spektrometer-Geometrie, ein Gütekriterium für Abbildungsfehler und/oder ein Gütekriterium für parasitäre Bündelverläufe verwendet wird.

7. Verfahren nach einem der vorherigen Ansprüche,

wobei die Gütefunktion mehrere Gütekriterien des Strahlengangs (3) umfasst,
wobei die Gütefunktion anhand des optischen Modells und einer vorgegebenen Gewichtung der Gütekriterien ein Gütemaß berechnet.

8. Verfahren nach einem der vorherigen Ansprüche,
wobei neben der Reihenfolge auch eine Position und Ausrichtung der optischen Komponenten (5) im optischen Modell vorgegeben wird.

9. Verfahren nach einem der Ansprüche 1-7,
wobei das optische Modell mindestens einen dritten freien Parameter für eine Position, Ausrichtung und/oder Flächenform zumindest einer der optischen Komponenten (5) aufweist.

10. Verfahren nach einem der vorherigen Ansprüche,
wobei als optische Komponenten (5) Spiegel, Filter, Gitter, Prismen und/oder Linsen verwendet werden.

11. Verfahren nach einem der vorherigen Ansprüche,
wobei als eine optische Komponente (5) ein Echelle-Gitter verwendet wird.

12. Verfahren nach einem der vorherigen Ansprüche,
wobei als Spektrometer (4) ein ICP-OES-Gerät oder AAS-Gerät verwendet wird.

13. Verfahren zur Herstellung einer Aperturblende (2) mit einer Apertur (1), deren Aperturgeometrie an einen Strahlengang (3) von Lichtbündeln in einem Spektrometer (4) angepasst ist, wobei das Spektrometer (4) mehrere optische Komponenten (5) und einen Detektor (6) aufweist, wobei die optischen Komponenten (5) derart angeordnet und ausgestaltet sind, dass sie den Strahlengang (3) der Lichtbündel von einer Lichtquelle (7) zum Detektor (6) führen, wobei der Detektor (6) dazu ausgestaltet ist, die Lichtbündel in Form eines Spektrums zu detektieren, wobei das Verfahren zumindest die folgenden Schritte aufweist:

- Bestimmen der Aperturgeometrie nach einem der vorherigen Ansprüche,
- Bereitstellen eines Rohlings (11) für die Aperturblende (2),
- Ausnehmen zumindest eines Bereichs (12) des Rohlings (11), welcher der bestimmten Aperturgeometrie entspricht.

14. Spektrometer (4) mit mehreren optischen Komponenten (5), einem Detektor (6) und einer Aperturblende (2), welche nach dem Verfahren nach Anspruch 13 hergestellt ist, wobei die optischen Komponenten (5) derart angeordnet und ausgestaltet sind, dass sie den Strahlengang (3) der Lichtbündel von einer Lichtquelle (7) zum Detektor (6) führen, wobei der Detektor (6) dazu ausgestaltet ist, die Lichtbündel in Form eines Spektrums zu detektieren.

Fig. 1

Fig. 2

Fig. 3

11

12, 1

Europäisches
Patentamt

European
Patent Office

Office européen
des brevets

## EUROPÄISCHER RECHERCHENBERICHT

Nummer der Anmeldung

EP 25 18 4871

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 11 2018 005597 T5 (AGILENT TECHNOLOGIES INC [US]) 16. Juli 2020 (2020-07-16) * Abbildungen 1,10 * * Absätze [0001], [0017], [0029], [0035], [0040], [0059], [0060], [0070], [0084], [0085] * ----- | 1-14 | INV. G01J3/02 G02B27/00 ADD. G02B5/00 |
| X | US 2012/188542 A1 (DEMMER DAVID R [CA] ET AL) 26. Juli 2012 (2012-07-26) * Abbildungen 2,3 * * Absätze [0015], [0018], [0020] - [0023] * ----- | 1-14 | |
| A | EP 2 407 761 A2 (CORNING INC [US]) 18. Januar 2012 (2012-01-18) * Abbildungen 1,9 * * Absätze [0022], [0023] * ----- | 1-14 | |
| A | US 2005/270528 A1 (GESHWIND FRANK [US] ET AL) 8. Dezember 2005 (2005-12-08) * Abbildungen 1,6,11 * * Absätze [0002], [0191], [0290] - [0292] * ----- | 1-14 | RECHERCHIERTE SACHGEBIETE (IPC) G01J G02B |

Der vorliegende Recherchenbericht wurde für alle Patentansprüche erstellt

| Recherchenort | Abschlußdatum der Recherche | Prüfer |
|---|---|---|
| München | 18. November 2025 | Gangl, Martin |

**ANHANG ZUM EUROPÄISCHEN RECHERCHENBERICHT
ÜBER DIE EUROPÄISCHE PATENTANMELDUNG NR.**

EP 25 18 4871

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-11-2025

| Im Recherchenbericht angeführtes Patentdokument | Datum der Veröffentlichung | Mitglied(er) der Patentfamilie | Datum der Veröffentlichung |
|---|---|---|---|
| DE 112018005597 T5 | 16-07-2020 | CN 111183342 A | 19-05-2020 |
| | | DE 112018005597 T5 | 16-07-2020 |
| | | JP 7239582 B2 | 14-03-2023 |
| | | JP 2021504709 A | 15-02-2021 |
| | | US 2020379270 A1 | 03-12-2020 |
| | | WO 2019106443 A1 | 06-06-2019 |
| US 2012188542 A1 | 26-07-2012 | KEINE | |
| EP 2407761 A2 | 18-01-2012 | CN 101432605 A | 13-05-2009 |
| | | EP 2013593 A1 | 14-01-2009 |
| | | EP 2407761 A2 | 18-01-2012 |
| | | JP 5602425 B2 | 08-10-2014 |
| | | JP 5650688 B2 | 07-01-2015 |
| | | JP 5650809 B2 | 07-01-2015 |
| | | JP 5919349 B2 | 18-05-2016 |
| | | JP 2009535621 A | 01-10-2009 |
| | | JP 2012230388 A | 22-11-2012 |
| | | JP 2013231984 A | 14-11-2013 |
| | | JP 2015051499 A | 19-03-2015 |
| | | KR 20090006220 A | 14-01-2009 |
| | | KR 20140054440 A | 08-05-2014 |
| | | US 2007252989 A1 | 01-11-2007 |
| | | WO 2007127167 A1 | 08-11-2007 |
| US 2005270528 A1 | 08-12-2005 | KEINE | |

EPO FORM P0461

Für nähere Einzelheiten zu diesem Anhang : siehe Amtsblatt des Europäischen Patentamts, Nr.12/82